Europäisches Patentamt

European Patent Office

Office européen des brevets

(11) Veröffentlichungsnummer: **0 120 477**
**A2**

## (12) EUROPÄISCHE PATENTANMELDUNG

(21) Anmeldenummer: **84103185.9**

(22) Anmeldetag: **22.03.84**

(51) Int. Cl.³: **H 04 M 1/274**

(30) Priorität: **25.03.83 DE 3310964**

(43) Veröffentlichungstag der Anmeldung:
**03.10.84 Patentblatt 84/40**

(84) Benannte Vertragsstaaten:
**AT CH DE FR GB IT LI NL SE**

(71) Anmelder: **Siemens Aktiengesellschaft
Berlin und München Wittelsbacherplatz 2
D-8000 München 2(DE)**

(72) Erfinder: **Gilch, Gerhard, Dr.rer.pol.
Heinleinstrasse 12
D-8000 München 71(DE)**

(72) Erfinder: **Kaufmann, Peter, Ing. (grad.)
Lindenweg 1
D-8031 Gilching(DE)**

(72) Erfinder: **Noè, Werner, Dipl.-Ing.
Am Schlosspark 12
D-8035 Gauting(DE)**

(54) **Anordnung zum selbsttätigen Wählen von Zielnummern.**

(57) Bei einem mit einem Bildschirm (6) versehenen Komfort-telefon ist es vorgeshen, auszuwählende Zielnummern, gegebenenfalls mit einem zugehörigen Text unter vor-gegebenen Laufnummern am Bildschirm (6) darzustellen. Beim Betätigen einer jeweils einer Laufnummer zugeordne-ten Taste an einer Wahltastatur (2) wird die jeweilige Ziel-nummer selbsttätig gewählt. Die Zielnummer kann die Teil-nehmernummer eines fernen Fernsprechteilnehmers oder eine Seitennummer beim Dienst "Bildschirmtext" sein. Die den Zielnummern zugeordneten Texte sind alphabetisch sor-tierbar und werden nach dem Betätigen einer entsprechen-den Taste an einer alphabetischen Tastatur (3) am Bildschirm (6) dargestellt. Falls die Darstellungskapazität für den jeweiligen Buchstaben nicht ausreicht, ist durch ein noch-maliges Betätigen der Taste ein "Weiterblättern" möglich.

**FIG 1**

0120477

SIEMENS AKTIENGESELLSCHAFT          Unser Zeichen
Berlin und München                  VPA 83 P 1 2 0 7 E

## Anordnung zum selbsttätigen Wählen von Zielnummern

Die Erfindung bezieht sich auf eine Anordnung zum selbsttätigen Wählen von Zielnummern entsprechend dem Oberbegriff des Patentanspruchs 1.

Zum Erleichtern des Wählens der Teilnehmernummer eines fernen Teilnehmers an einem Fernsprechapparat ist es bereits allgemein bekannt, im Fernsprechapparat oder in einem Zusatzgerät mehrere Teilnehmernummern zu speichern und jeweils eine dieser Teilnehmernummern durch das Betätigen einer oder mehrerer Tasten aufzurufen. Falls jeder Teilnehmernummer eine Taste zugeordnet ist, kann diese mit dem Namen des jeweiligen Teilnehmers beschriftet werden und nach dem Betätigen der Taste wird die entsprechende Teilnehmernummer selbsttätig gewählt. Eine derartige Anordnung hat den Nachteil, daß bei einer Vielzahl von Teilnehmernummern sehr viele Tasten erforderlich sind. Häufig ist hierzu ein Beistellgerät erforderlich, das eine zusätzliche Stellfläche erfordert.

Es ist auch möglich, jeder Zifferntaste einer Wahltastatur eine vollständige Teilnehmernummer zuzuordnen. Nach dem Betätigen einer Zifferntaste wird dann die vollständige Teilnehmernummer selbsttätig gewählt. Hierzu ist es erforderlich, eine Liste vorzusehen, in der die Zuordnung zwischen den Zifferntasten und den Teilnehmernummern enthalten ist. Außerdem ist die Anzahl der gespeicherten Teilnehmernummern normalerweise auf neun Teilnehmernummern, entsprechend den neun Zifferntasten beschränkt.

Ret 1 Fra / 24.3.1983

Der Erfindung liegt die Aufgabe zugrunde, eine Anordnung anzugeben, mit der eine Vielzahl von Zielnummern selbsttätig wählbar ist und bei der auf einfache Weise die Zuordnung zwischen den Zielnummern und den entsprechenden Wahltasten herstellbar ist.

Erfindungsgemäß wird die Aufgabe bei der Anordnung der eingangs genannten Art durch die im Patentanspruch 1 angegebenen Merkmale gelöst.

Die Zielnummern werden zweckmäßigerweise vom begleitenden Text durch besondere Kennungszeichen getrennt. Die Zielnummern sind entweder Teilnehmernummern von fernen Teilnehmern, wenn die Anordnung in einem Fernsprechgerät benutzt wird oder die Seitennummern von Bildschirmtextseiten, wenn die Anordnung in einem Endgerät für den Telekommunikationsdienst "Bildschirmtext" benutzt wird. Falls das Fernsprechgerät und das Bildschirmtextgerät in einem Endgerät integriert sind, werden die Zielnummern entweder als Teilnehmernummern oder als Bildschirmtextseiten interpretiert, je nach dem in welchem Funktionszustand sich das Endgerät befindet. Dementsprechend sind auch die von der Anordnung abgegebenen Signale entweder Impulswahl- oder Mehrfrequenzwahlsignale oder Daten, die die jeweilige Bildschirmtextseite aufrufen. Die Zielnummer kann auch eine Kennungsnummer, beispielsweise eine Kontonummer oder eine Identifizierungsnummer sein, die, beispielsweise bei einer Fernbuchung unter Verwendung des Dienstes "Bildschirmtext" vom Teilnehmer jeweils einzugeben ist.

Die Zielnummern und die zugehörigen Texte werden in den Speicher unter Verwendung einer alphabetischen Tastatur und der Wahltastatur eingegeben. Es ist auch möglich, die Zielnummern und die zugehörigen Texte mittels einer herausnehmbaren Steckkarte einzugeben. Weiterhin ist es auch möglich, über den Dienst "Bildschirmtext" sich von einer

0120477

Bildschirmtextzentrale einen entsprechenden Ausschnitt aus einem Zielnummernverzeichnis an der Anzeigeeinheit darstellen zu lassen. Aus diesem Verzeichnis können entweder einzelne Nummern und zugehörige Texte in den Speicher übernommen werden oder es ist auch möglich, nach dem Betätigen einer entsprechenden Wahltaste die Teilnehmernummer eines fernen Teilnehmers oder eine Bildschirmtextseite unmittelbar aufgrund des dargestellten Verzeichnisses, das in diesem Fall mit Laufnummern versehen wird, zu wählen.

Zweckmäßigerweise werden die Inhalte des Speichers nach dem Betätigen einer entsprechenden Funktionstaste vollständig oder buchstabenweise sortiert.

Zum Aussenden einer bestimmten Zielnummer wird zunächst die entsprechende Buchstabentaste betätigt und die unter diesen Buchstaben gespeicherten Zielnummern und Texte werden zusammen mit den Laufnummern dargestellt. Zum Aussenden der Zielnummer muß dann nur noch die Zifferntaste betätigt werden, die der entsprechenden Laufnummer entspricht. Falls nicht alle unter diesen Buchstaben gespeicherten Texte und Zielnummern darstellbar sind, wird durch ein nochmaliges Betätigen derselben Buchstabentaste "weitergeblättert", so daß unter jedem Buchstaben sehr viele Zielnummern und zugehörige Texte speicherbar sind.

Die Zielnummern und/oder die Texte sind auch verdeckt darstellbar, so daß beispielsweise ein Unbefugter nach dem Aufrufen der entsprechenden Inhalte des Speichers auf dem Bildschirm die Inhalte (z.B. Kennwörter) nicht entnehmen kann.

Schließlich ist es noch möglich, eine "Notseite" zusammenzustellen, in der beispielsweise neun Notrufnummern zusammengestellt sind. Wenn sich das Gerät in einem Ruhe-

0120477

zustand befindet und beispielsweise unter Verwendung eines Schlüsselschalters abgeschaltet ist, erscheint diese Notseite beim Betätigen einer beliebigen Taste an der Anzeigeeinheit. Nun kann wieder eine der jeweiligen Laufnummer zugeordnete Zifferntaste betätigt werden, und die zugehörige Notrufnummer wird selbsttätig gewählt.

Im folgenden wird ein Ausführungsbeispiel der Anordnung gemäß der Erfindung anhand von Zeichnungen näher erläutert. Es zeigen

Fig. 1 eine perspektivische Ansicht eines mit der Anordnung versehenen Bildschirmtelefons,

Fig. 2 eine Darstellung von Texten und Zielnummern an einer Anzeigeeinheit des Bildschirmtelefons,

Fig. 3 ein Blockschaltbild des Bildschirmtelefons.

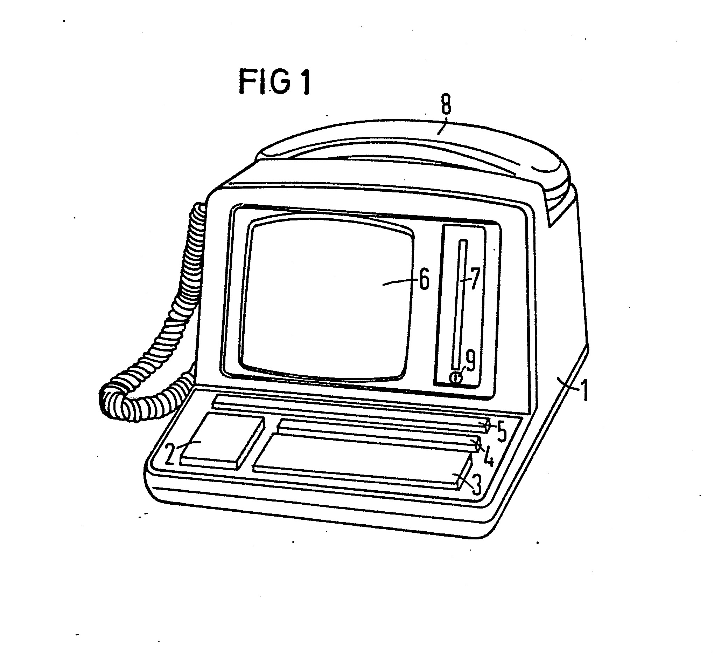

Das in Fig. 1 dargestellte Bildschirmtelefon besteht aus einem Gehäuse 1, dessen vorderer Teil eine Tastatur aufweist. Die Tastatur enthält eine Zifferntastatur 2, die gleichzeitig als Wahltastatur dient, eine alphabetische Tastatur 3, einen Funktionstastatur 4 und eine weitere Funktionstastatur 5. Weiterhin enthält das Bildschirmtelefon eine Anzeigeeinheit 6, die beispielsweise als Bildschirm einer Kathodenstrahlröhre ausgebildet ist. Neben dem Bildschirm ist eine Aufnahme 7 für eine Steckkarte angeordnet. Ein Handapparat 8 mit einer Sprech- und einer Hörkapsel liegt quer auf dem Gehäuse 1 auf. Zusätzlich ist das Bildschirmtelefon mit einem Schlüsselschalter 9 versehen.

Das Bildschirmtelefon ist eine mehrfunktionale integrierte Teilnehmereinrichtung, das für den Dienst "Fernsprechen" und den Dienst "Bildschirmtext" vorgesehen ist. Zu-

0120477

sätzlich können noch lokale Komfortfunktionen ausgeführt werden. Das Bildschirmtelefon ist an ein öffentliches oder an ein privates Fernsprechnetz anschließbar. Das Bildschirmtelefon ist wahlweise für eine Impulswahl oder eine Mehrfrequenzwahl vorgesehen.

Im Funktionszustand "Fernsprechen" erfolgt normalerweise die Wahl eines fernen Teilnehmers bei abgehobenem Handapparat 8 durch Betätigen der entsprechenden Zifferntasten der Wahltastatur 2. Eine Verbindung zu einem fernen Teilnehmer kann auch bei aufliegendem Handapparat aufgebaut werden. Die Hörtöne werden dann über einen Lautsprecher übertragen. Sobald sich der gerufene Teilnehmer meldet, kann zum Sprechen der Handapparat 8 abgenommen werden oder es ist ein Freisprechen möglich.

Es ist möglich, mit dem Bildschirmtelefon eine selbsttätige Wahl aus einem Namensregister durchzuführen. Zu diesem Zweck enthält das Bildschirmtelefon einen Datenspeicher, in dem als Zielnummern Teilnehmernummern und zugehörige Texte speicherbar sind. Die Inhalte des Datenspeichers können insgesamt oder buchstabenweise sortiert sein und jeweils mit Laufnummern versehen sein. Beim Betätigen einer Buchstabentaste an der alphabetischen Tastatur 3 werden die unter dem entsprechenden Buchstaben gespeicherten ersten Teilnehmernummern und zugehörigen Texte an der Anzeigeeinheit 6 dargestellt. Jede Teilnehmernummer und der zugehörige Text sind mit einer Laufnummer versehen. Beispielsweise sind jeweils neun Zielnummern dargestellt, die mit den Laufnummern 1 bis 9 versehen sind. Diese Laufnummern entsprechen den Zifferntasten der Wahltastatur 2 und nach dem Betätigen einer entsprechenden Zifferntaste wird die unter der Laufnummer angegebene Teilnehmernummer selbsttätig gewählt. Zur Kennzeichnung der Teilnehmernummern werden diese zwischen besonderen Kennungszeichen, beispielsweise eckigen Klammern eingeschlossen.

Falls die gewünschte Teilnehmernummer sich nicht unter den ersten neun Teilnehmernummern befindet, wird dieselbe Buchstabentaste nochmals betätigt, so daß das Namenregister "weitergeblättert" wird und die nächsten neun Teilnehmernummern und zugehörigen Texte dargestellt werden.

Die Eingabe der Teilnehmernummern und der zugehörigen Texte erfolgt mittels der alphabetischen Tastatur 3 und der Wahltastatur 2. Es ist auch möglich, die Inhalte des Datenspeichers innerhalb der Buchstaben alpabetisch zu sortieren. Hierzu wird eine Taste der Funktionstastatur 5 betätigt.

Es ist auch möglich, eine Teilnehmernummer und/oder einen Teil des zugehörigen Textes verdeckt darzustellen. Hierzu wird ebenfalls bei der Eingabe eine Taste an der Funktionstastatur 5 betätigt. Auf diese Weise sind die verdeckten Teile Unbefugten nicht mehr zugänglich. Das Aufdecken der verdeckten Teile kann beispielsweise nur dann möglich sein, wenn über die alphabetische Tastatur ein bestimmtes Codewort eingegeben wird oder wenn in die Aufnahme 7 eine die Berechtigung nachweisende Steckkarte eingesteckt ist.

Wenn unter Verwendung des Schlüsselschalters 9 das Bildschirmtelefon in einen Ruhezustand eingestellt wird, ist es möglich, an der Anzeigeeinheit 6 eine Sonderseite, beispielsweise eine "Notseite" darzustellen. Beim Betätigen einer beliebigen Taste der Tastatur werden an der Anzeigeeinheit 6 maximal neun Notrufnummern und zugehörige Texte unter den entsprechenden Laufnummern dargestellt. Wenn anschließend eine der Laufnummern zugeordnete Zifferntaste betätigt wird, wird die entsprechende Notrufnummer selbsttätig gewählt.

Wenn beim Bildschirmtelefon der Funktionszustand "Bildschirmtext" eingestellt ist·, ist es möglich, unter Verwendung desselben oder eines weiteren Registers auch einzelne Bildschirmtextseiten selbsttätig aufzurufen. In diesem Fall werden die Zielnummern als Seitennummern interpretiert und in Form von Datensignalen zur Bildschirmtextzentrale gesendet. Auch hierzu wird zunächst eine Buchstabentaste betätigt, hinter der sich ein Schlagwortregister befindet. Bei der Darstellung der entsprechenden Schlagwörter und der zugehörigen Bildschirmtextseitennummern, die ebenfalls durch besondere Kennungszeichen eingerahmt sind, wird beim Betätigen einer der Laufnummer zugeordneten Zifferntaste an der Wahltastatur die entsprechende Bildschirmtextseite selbsttätig angewählt. Das Schaltwortregister kann mit dem Namensregister in einem Pool zusammengefaßt sein. Je nach dem in welchem Zustand sich das Bildschirmtelefon befindet, wird nach dem Drükken eines Buchstabens das Namensregister oder das Schlagwortregister abgebildet. Bei der Wahl wird die Zielnummer entweder als Teilnehmernummer oder als Seitennummer interpretiert und entweder in Wählsignale umgesetzt, die zur Vermittlungsstelle übertragen werden oder in Datensignale umgesetzt, die zur Bildschirmtextzentrale übertragen werden.

Die Zielnummern können auch Kennungsnummern darstellen, die entweder den Teilnehmer identifizieren oder beispielsweise eine Kontonummer für eine Fernbuchung darstellen. Beispielsweise wird bei einer Fernbuchung im Bildschirmtextbetrieb beim Aufrufen einer als Kontonummer zu interpretierenden Zielnummer durch die entsprechende Zifferntaste diese Kontonummer in Form von Datensignalen zur Bildschirmtextzentrale übertragen.

Es ist auch möglich, über die Bildschirmtextzentrale ein elektronisches Telefonbuch zu realisieren. Nach dem Aufrufen einer entsprechenden Bildschirmtextseite wird beispielsweise ein gewünschter Ausschnitt aus dem Telefonverzeichnis an der Anzeigeeinheit 6 dargestellt. Durch
Auswahl der entsprechenden Telefonnummer und der zugehörigen Anschrift mit Hilfe der Zifferntaste oder einer bei
Sichtgeräten üblicherweise vorgesehenen Schreibmarke ist
es einerseits möglich, die Teilnehmernummer und gegebenenfalls den Text in den Datenspeicher für das Namensregister zu übernehmen oder nach dem Betätigen einer entsprechenden Wähltaste diese dargestellte Teilnehmernummer
sofort selbsttätig zu wählen. Entsprechendes gilt für die
Auswahl von Bildschirmtextseiten.

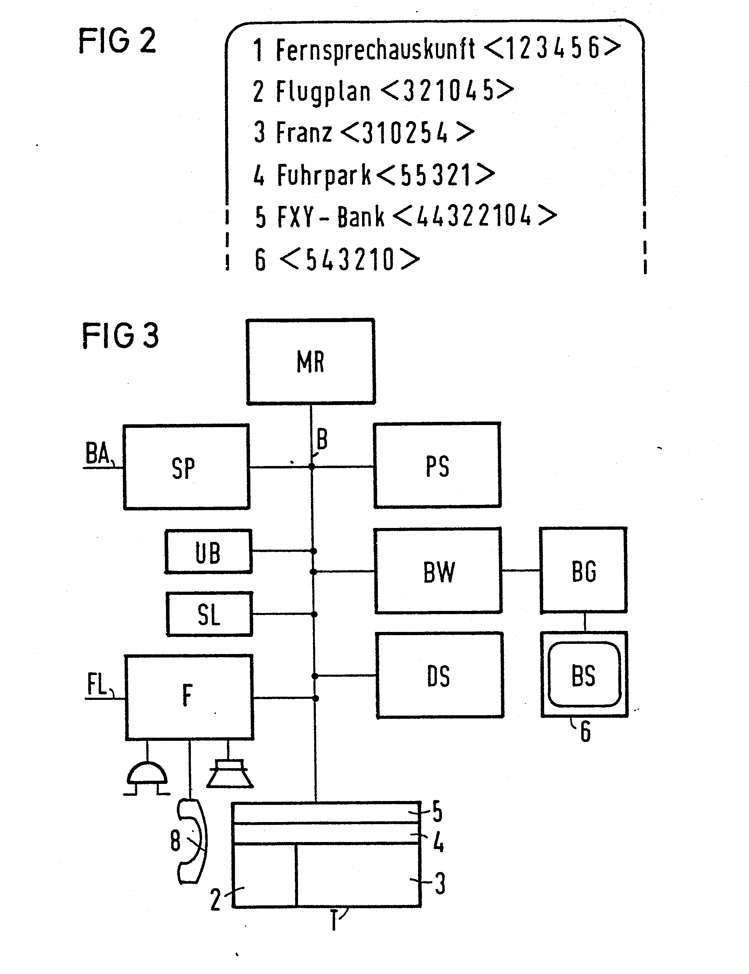

Bei dem in Fig. 2 dargestellten Ausschnitt ist eine Darstellung von Teilnehmernummern und zugehörigen Texten an
der Anzeigeeinheit 6 für den Funktionszustand Fernsprechen gezeigt. Wird beispielsweise an der alphabetischen
Tastatur 3 die Taste F betätigt, erscheinen unter den
Laufnummern 1 bis 6 die dargestellten Texte und Teilnehmernummern. Beim Betätigen einer Zifferntaste an der
Wahltastatur 2 wird die in den eckigen Klammern dargestellte Teilnehmernummer selbsttätig gewählt. Bei der
Laufnummer 6 ist auf einen erklärenden Text verzichtet
worden, da dieser nicht unbedingt erforderlich ist.

Wenn sich das Bildschirmtelefon im Funktionszustand Bildschirmtext befindet und das Schlagwortregister dargestellt
ist, wird nach dem Betätigen einer Zifferntaste 2 an der
Wahltastatur 2 in entsprechender Weise von der Bildschirmtextzentrale eine entsprechende Seite angefordert. Diese
wird dann an der Anzeigeeinheit 6 dargestellt. Bei einem
Fernbuchungsvorgang, bei dem die Kontonummer des Teilnehmers erforderlich ist, wird nach dem Betätigen der Zifferntaste 5 die in den eckigen Klammern angegebene Nummer
als Kontonummer zur Bildschirmtextzentrale übertragen.
Hier erweist es sich gegebenenfalls als zweckmäßig, die
Kontonummer verdeckt darzustellen, so daß diese für Nichtberechtigte nicht zugänglich ist.

0120477

Das in Fig. 3 dargestellte Blockschaltbild zeigt den Zusammenhang zwischen den verschiedenen Einrichtungen des Bildschirmtelefons. An den Daten-, Adreß- und Steuerbus B eines Mikrorechners MR ist ein Programmspeicher PS, ein Bildwiederholspeicher BW, ein die Zielnummern und die zugehörigen Texte enthaltender Datenspeicher DS, eine Fernsprechschaltung F, die Tastatur T und ein Serien-Parallelumsetzer SP angeschlossen. An dem Bildwiederholspeicher BW ist ein Bildgenerator BG zum Darstellen von Zeichen und grafischen Mustern am Bildschirm BS der Anzeigeeinheit 6 angeschlossen. Die Tastatur T enthält die alphabetische Tastatur 3, die Funktionstastaturen 4 und 5 sowie die Zifferntastatur 2, die auch als Wahltastatur vorgesehen ist. An der Fernsprechschaltung F ist die Fernsprechleitung FL angeschlossen. Weiterhin sind dort der Handapparat 8, ein akustischer Signalgeber, ein Lautsprecher und gegebenenfalls ein Mikrophon für das Freisprechen angeschlossen. Der Serien-Parallelumsetzer SP ist über eine Anschlußleitung BA mit einem Bildschirmtextmodem verbunden. An dem Bus B können zusätzlich noch ein Steckkartenleser SL und ein Uhrenbaustein UB angeschlossen sein, der die Uhrzeit, die Fernsprech- oder Bildschirmtextgebühren oder zu stoppende Zeitdauern anzeigen kann und der auch für Terminrufe zu vorgegebenen Zeitpunkten eingesetzt werden kann.

Wenn sich das Bildschirmtelefon im Funktionszustand Fernsprechen befindet, kann unter Verwendung der Wahltastatur 2 in an sich bekannter Weise bei aufgelegtem oder abgenommenem Handapparat 8 gewählt werden. Falls die Wahl unter Verwendung des Namenregisters gewünscht wird, wird an der alphabetischen Tastatur 3 die entsprechende Taste betätigt. Aus dem Datenspeicher DS werden dann die ersten neun unter diesem Buchstaben gespeicherten Zielnummern und zugehörigen Texte unter Verwendung des Mikrorechners MR ausgelesen und in den Bildwiederholspeicher eingespei-

0120477

chert. Unter Verwendung des Bildgenerators BG werden sie dann am Bildschirm BS der Anzeigeeinheit 6 dargestellt. Wenn eine der Laufnummer zugeordnete Zifferntaste betätigt wird, geht die Fernsprechschaltung F in den Wählzustand und unter Verwendung der aus dem Mikrorechner MR und dem Programmspeicher PS gebildeten Steuereinheit wird die Teilnehmernummer in entsprechende Wählsignale umgesetzt, die entweder für die Impulswahl oder für die Mehrfrequenzwahl vorgesehen sind.

Wenn sich das Bildschirmtelefon im Funktionszustand Bildschirmtext befindet und der Zugriff zu einer bestimmten Seite gewünscht ist, wird ebenfalls eine entsprechende Taste an der alphabetischen Tastatur 3 betätigt, so daß aus dem Datenspeicher DS die entsprechenden Einträge in den Bildwiederholspeicher BW eingespeichert werden und am Bildschirm BS dargestellt werden. Wenn nun eine Zifferntaste betätigt wird, wird die entsprechende Zielnummer im Serien-Parallelumsetzer SP in Datensignale umgesetzt, die über die Anschlußleitung BA und einen Bildschirmtextmodem zur Bildschirmtextzentrale übertragen werden.

Sowohl beim Funktionszustand Fernsprechen als auch beim Funktionszustand Bildschirmtext werden bei einem nochmaligen Betätigen der Buchstabentaste die jeweils nächsten Einträge unter diesen Buchstaben vom Datenspeicher DS ausgelesen und an den Bildwiederholspeicher BW übertragen, um am Bildschirm BS dargestellt zu werden.

Für eine verdeckte Darstellung der Zielnummern oder der Texte wird bei deren Eingabe an der Funktionstastatur 5 eine entsprechende Taste betätigt, so daß diese Zeichen mit einem Sonderzeichen versehen werden und im Datenspeicher DS abgespeichert werden. Beim Übertragen dieser Zeichen in den Bildwiederholspeicher BW werden an deren Stelle solche Zeichen übertragen, daß der Bildgenerator

**0120477**

BG die Zeichen an dem Bildschirm BS an den entsprechenden Stellen verdeckt darstellt, so daß diese Zielnummern oder Texte nicht gelesen werden können, jedoch zum Auswählen zur Verfügung stehen.

11 Patentansprüche
3  Figuren

0120477

Patentansprüche

1. Anordnung zum selbsttätigen Wählen von Zielnummern in einem an einer Fernleitung angeschlossenen Endgerät, bei dem nach dem Betätigen mindestens einer Taste einer Wahltastatur die entsprechende Zielnummer in codierte Signale umgesetzt wird und über die Fernleitung übertragen wird, g e k e n n z e i c h n e t  d u r c h  einen Datenspeicher (DS), in dem eine Mehrzahl von Zielnummern und zugehörige Texte speicherbar sind, durch eine Anzeigeeinheit (6) an der die Zielnummern und die zugehörigen Texte nach dem Betätigen einer Taste einer alphabetischen Tastatur (3) neben vorgegebenen Laufnummern darstellbar sind und durch eine Steuereinheit (MR, PS), die nach dem Betätigen einer der Laufnummer entsprechenden Taste an der Wahltastatur (2) die Zielnummer in die codierten Signale umsetzt und an die Fernleitung (FL, BA) abgibt.

2. Anordnung nach Anspruch 1, d a d u r c h  g e - k e n n z e i c h n e t ,  daß die Zielnummern vom zugehörigen Text durch besondere Kennungszeichen getrennt sind.

3. Anordnung nach Anspruch 1 oder Anspruch 2, d a - d u r c h  g e k e n n z e i c h n e t ,  daß als Zielnummern Teilnehmernummern von fernen Teilnehmern beim Dienst "Fernsprechen" vorgesehen sind und daß die codierten Signale als Impulswahlsignale oder Mehrfrequenzwahlsignale ausgebildet sind.

4. Anordnung nach Anspruch 1 oder Anspruch 2, d a - d u r c h  g e k e n n z e i c h n e t ,  daß als Zielnummern Seitennummern für den Abruf bestimmter Bildschirmtextseiten beim Dienst "Bildschirmtext" vorgesehen sind.

0120477

5. Anordnung nach einem der Ansprüche 1 bis 4, d a - d u r c h  g e k e n n z e i c h n e t , daß die in dem Datenspeicher (DS) gespeicherten Zielnummern und zugehörigen Texte mittels einer alphabetischen Tastatur (3) und einer Zifferntastatur (2) eingebbar sind.

6. Anordnung nach einem der Ansprüche 1 bis 4, d a - d u r c h  g e k e n n z e i c h n e t , daß die in dem Datenspeicher (DS) gespeicherten Zielnummern und zugehörigen Texte mittels einer Steckkarte eingebbar sind.

7. Anordnung nach einem der Ansprüche 1 bis 5, d a - d u r c h  g e k e n n z e i c h n e t , daß die in dem Datenspeicher (DS) gespeicherten Zielnummern und zugehörigen Texte aus einer aufgerufenen Bildschirmtextseite in den Datenspeicher (DS) mindestens teilweise übertragbar sind.

8. Anordnung nach einem der Ansprüche 1 bis 7, d a - d u r c h  g e k e n n z e i c h n e t , daß die in dem Datenspeicher (DS) gespeicherten Texte buchstabenweise sortierbar sind.

9. Anordnung nach einem der Ansprüche 1 bis 8, d a - d u r c h  g e k e n n z e i c h n e t , daß die in dem Datenspeicher (DS) gespeicherten Zielnummern und zugehörigen Texte durch ein wiederholtes Betätigen einer Buchstabentaste fortschaltbar sind.

10. Anordnung nach einem der Ansprüche 1 bis 9, d a - d u r c h  g e k e n n z e i c h n e t , daß die in dem Datenspeicher (DS) gespeicherten Zielnummern und/oder Texte mindestens teilweise verdeckt darstellbar sind.

11. Anordnung nach einem der Ansprüche 1 bis 10, d a - d u r c h  g e k e n n z e i c h n e t , daß in einem

- 14 -     VPA 83 P 1207.E

0120477

abgesperrten Zustand des Geräts nach dem Betätigen einer beliebigen Taste ausgewählte Zielnummern und zugehörige Texte in einer "Notseite" darstellbar sind und daß nach dem Betätigen einer bestimmten Taste der Zifferntastatur (2) die unter der entsprechenden Laufnummer dargestellte Zielnummer als Teilnehmernummer selbsttätig gewählt wird.

FIG 1

**FIG 2**

> 1 Fernsprechauskunft <123456>
>
> 2 Flugplan <321045>
>
> 3 Franz <310254>
>
> 4 Fuhrpark <55321>
>
> 5 FXY-Bank <44322104>
>
> 6 <543210>

**FIG 3**